# EUROPÄISCHE PATENTANMELDUNG

(11) **EP 2 450 636 A2**
(43) Veröffentlichungstag der Anmeldung: **09.05.2012**
(21) Anmeldenummer: 11188246.0
(22) Anmeldetag: 08.11.2011
(51) Int. Cl.: F24D 3/14

(54) **Bodenbelagsträgerelement und Bodenbelagsanordnung mit Bodenbelagsträgerelement**

(30) Priorität: 08.11.2010 DE 202010008978 U
(71) Anmelder: Gutjahr, Walter, 64404 Bickenbach (DE); herotec GmbH Flächenheizung, 59227 Ahlen (DE)
(72) Erfinder: Gutjahr, Walter, 64440 Bickenbach (DE); Thronicke, Sandro, 64440 Bickenbach (DE); Heuser, Thomas, 59320 Ennigerloh (DE); Lammering, Wilfried, 48565 Steinfurt (DE)
(74) Vertreter: Katscher Habermann Patentanwälte

(57) **Zusammenfassung**

Ein Bodenbelagsträgerelement (22), auf dem ein begehbarer Oberflächenbelag verlegbar ist, weist eine profilierte Kunststoffbahn (8), ein auf einer Oberseite (13) der profilierten Kunststoffbahn (8) angeordnetes Gittergewebe (16) und eine Unterseite (14) der profilierten Kunststoffbahn (8) mindestens bereichsweise eine Haftmittelbeschichtung (16) auf, die mindestens bereichsweise an einer Unterseite (14) der profilierten Kunststoffbahn (8) angeordnet ist. Die Haftmittelbeschichtung (16) besteht aus einem dauerelastischen oder dauerplastischen Klebemittel und ist mit einer abziehbaren Schutzfolie (23) bedeckt. Die profilierte Kunststoffbahn (8) weist streifenförmige und parallel ausgerichtete Erhebungen (9) und Vertiefungen (10) sowie flüssigkeits- und luftdurchlässige Aussparungen (17) auf. Das Gittergewebe (18) ist bereichsweise auf der profilierten Kunststoffbahn (8) festgelegt. Eine Bodenbelagsanordnung (5) weist ein vorangehend beschriebenes Bodenbelagsträgerelement auf, auf dem ein begehbarer Oberflächenbelag verlegbar ist, wobei auf einem Untergrund (1) verlegbare plattenförmige Belagselemente (2) nutenförmige Aufnahmekanälen (3) für Rohrleitungen (4) aufweisen, die von einem Wärmemedium durchströmbar sind. Die plattenförmigen Belagselemente (2) weisen auf einer der profilierten Kunststoffbahn (8) zugewandten Oberseite (6) eine Deckschicht (7) aus einem gut wärmeleitenden Material auf.

## Beschreibung

Die Erfindung betrifft ein Bodenbelagsträgerelement, auf dem ein begehbarer Oberflächenbelag verlegbar ist, mit einer profilierten Kunststoffbahn und mit einem auf einer Oberseite der profilierten Kunststoffbahn angeordneten Gittergewebe.

Auf einem starren und hoch belastbaren Untergrund, wie er beispielsweise durch eine Betonplatte oder eine ausreichend dicke Estrichschicht gebildet wird, kann ein aus Fliesen oder anderen Plattenbelägen gebildeter begehbarer Oberflächenbelag direkt verlegt und mit Hilfe eines Klebemittels oder Klebemörtels fixiert werden. Die für den Oberflächenbelag erforderliche Aufbauhöhe ist in derartigen Fällen lediglich geringfügig größer als die Dicke des verlegten Oberflächenbelags bzw. der Fliesen oder der Oberflächenbelagsplatten. In vielen Fällen soll die Aufbauhöhe möglichst gering sein können, um bei vorgegebenen räumlichen Bedingungen einen bündigen Anschluss an angrenzende Bodenbeläge, Türschwellen oder Türöffnungen zu ermöglichen.

Wenn ein begehbarer Oberflächenbelag auf einem nicht ausreichend starren oder belastbaren Untergrund verlegt werden soll, muss in der Regel eine mechanisch ausreichend belastbare Zwischenschicht unter dem Oberflächenbelag angeordnet werden, die ein festes Tragwerk für die einzelnen Fliesen oder Belagsplatten des Oberflächenbelags bildet. Aus der Gebrauchsmusterschrift DE 203 16 204 U1 ist beispielsweise eine Bewehrungsanordnung bekannt, die einen im Wesentlichen ebenflächigen Träger aus dünnem, metallischem Bandmaterial oder Blech aufweist, der zum Beispiel auf Schaumkunststoffplatten angeordnet werden kann, die für eine verbesserte Wärme- oder Schalldämmung auf einem Untergrund verlegt wurden. Der ebenflächige Träger aus einem metallischen Bandmaterial weist auf einer Oberseite Verankerungsmittel auf, die eine form- und/oder stoffschlüssige Verbindung mit einer Mörtel- oder Kleberschicht gewährleisten können. In die Mörtel- oder Kleberschicht können anschließend die Fliesen oder anderen Oberflächenbelagsplatten eingebettet werden. Die metallischen Träger bilden mit der Mörtel- oder Kleberschicht einen hochfesten Verbund, der eine räumlich konzentrierte Beanspruchung auf dem Oberflächenbelag großflächig auf die darunter befindlichen Schaumkunststoffplatten verteilt und dadurch verhindert, dass die Schaumkunststoffplatten punktuell eingedrückt und beschädigt werden.

In Schaumkunststoffplatten oder anderen vergleichbaren plattenförmigen Belagselementen können die für eine Fußbodenheizung erforderlichen wärmeübertragenden Elemente angeordnet werden. Aus der Praxis ist es bekannt, dass in den Schaumkunststoffplatten nutenförmige Aufnahmekanäle ausgebildet sind, in denen Rohrleitungen angeordnet werden können, die von einem Wärmemedium durchströmbar sind. Als Wärmemedium kann beispielsweise Wasser verwendet werden, dass mit einer Niedrigtemperatur-Heizeinrichtung erwärmt wurde. Während das erwärmte Wasser die Rohrleitungen durchströmt, gibt das erwärmte Wasser Wärme in die umgebenden Bereiche der Bodenbelagsanordnung ab.

Auf Grund von unterschiedlichen Wärmeausdehnungskoeffizienten der verschiedenen Materialien, die in einer solchen Bodenbelagsanordnung verwendet werden, kommt es bei Temperaturschwankungen, wie sie während des Betriebs der Fußbodenheizung üblicherweise auftreten können, regelmäßig zu einer erheblichen thermischen Beanspruchung der Bodenbelagsanordnung. Um eine Beschädigung und beispielsweise Risse in dem sichtbaren Oberflächenbelag zu vermeiden ist es bekannt, dass die den Oberflächenbelag bildenden Fliesen oder Oberflächenbelagsplatten auf einer mehrere Zentimeter dicken Estrichschicht angeordnet, bzw. darin eingebettet werden. Neben einer vergleichsweise großen Aufbauhöhe hat dies jedoch den Nachteil, dass bei einem Betrieb der Fußbodenheizung zunächst die dicke Estrichschicht erwärmt werden muss, bevor der Oberflächenbelag und der darüber liegende Raum erwärmt werden können.

Beispielsweise aus DE 20 2006 015 397 U1 ist eine Bodenbelagsanordnung bekannt, bei der auf plattenförmigen Belagselementen, in die eine Fußbodenheizung eingebettet sein kann, eine vorzugsweise vliesartige Entkopplungsschicht angeordnet ist, die eine mechanische Entkopplung zwischen den plattenförmigen Belagselementen und einem darauf angeordneten begehbaren Oberflächenbelag bildet. Auf der Entkopplungsschicht sind ein gitterartiges Strukturelement und darauf eine Armierungsschicht aus einem ebenfalls gitterartig gebildeten Gewebe, vorzugsweise Glasfasergewebe angeordnet. Eine von oben auf die Armierungsschicht und das gitterartige Strukturelement aufgetragene aushärtende Verfüllmasse bildet einen mechanisch stabilen Verbund mit dem gitterartigen Strukturelement und dem Glasfasergewebe, auf der der Oberflächenbelag angeordnet werden kann. Durch die vliesartige Entkopplungsschicht kann erreicht werden, dass die während des Betriebs der Fußbodenheizung auftretenden wechselnden Spannungen und Dehnungen in den plattenförmigen Belagselementen weitgehend von dem darauf befindlichen Oberflächenbelag entkoppelt werden. Die Verwendung einer vliesartigen Entkopplungsschicht in Verbindung mit gitterförmigen Strukturelementen und einer Armierungsschicht ist allerdings in der Herstellung und in der Verarbeitung kostenintensiv.

Es wird deshalb als eine Aufgabe der vorliegenden Erfindung angesehen, ein Bodenbelagsträgerelement so auszugestalten, das es eine ausreichende mechanische Belastbarkeit und ebenfalls nur eine geringe Aufbauhöhe aufweist und sowohl geringe Herstellungskosten als auch eine möglichst kostengünstige und rasche Verlegung ermöglicht.

Diese Aufgabe wird erfindungsgemäß dadurch gelöst, dass eine Unterseite der profilierten Kunststoffbahn mindestens bereichsweise eine Haftmittelbeschichtung aufweist.

Das Bodenbelagsträgerelement kann unmittelbar auf einem Untergrund, bzw. auf einer Oberseite von plattenförmigen Bodenbelagselementen mit einer eingebetteten Fußbodenheizvorrichtung verlegt werden. Auf Grund der Haftmittelbeschichtung wird das Bodenbelagsträgerelement in der vorgegebenen Position fixiert. Die Verlegung mehrerer aneinander angrenzender Bodenbelagsträgerelemente, die eine vollflächige Bodenbelagstragschicht bilden, wird dadurch erheblich erleichtert. Die Haftmittelbeschichtung bildet eine selbstklebende Montagefixierung. Die Verwendung eines austrocknenden Klebemörtels, wie es gemäß dem Stand der Technik bekannt ist, ist nicht erforderlich, so dass eine kurze Verlegedauer ermöglicht wird.

Ein derartiges Bodenbelagsträgerelement kann in einfacher Weise rasch und kostengünstig hergestellt werden. Die profilierte Kunststoffbahn kann beispielsweise durch Tiefziehen oder Extrudieren eines geeigneten Kunststoffmaterials erzeugt und in einem anschließenden Arbeitsgang auf der Unterseite mit einer Haftmittelbeschichtung und auf der Oberseite mit einem aufgeklebten Gittergewebe versehen werden.

Die Haftmittelbeschichtung kann aus einem dauerelastischen oder dauerplastischen Klebemittel bestehen. Während des Verlegens der Bodenbelagsträgerelemente und des darauf angeordneten Oberflächenbelags wird eine ausreichende und die Verlegung erleichternde Montagefixierung gewährleistet. Anschließend erlaubt das dauerelastische oder dauerplastische Klebemittel einen spannungsarmen Ausgleich zwischen den benachbarten Schichten des Bodenbelags, die sich auf Grund von unterschiedlichen Wärmeausdehnungseigenschaften bei einer Erwärmung bzw. Abkühlung unterschiedlich stark ausdehnen oder zusammenziehen können.

Vorzugsweise ist vorgesehen, dass die Haftmittelbeschichtung aus einem Klebemittel besteht, das gute Hafteigenschaften auf einer Oberfläche aus Metall, aus Kunststoff oder aus einer metallischen Beschichtung gewährleistet. Bei den der Praxis bekannten Bodenbelagsanordnungen mit einer Fußbodenheizung, die in plattenförmige Belagselemente eingebettet ist, weisen die Belagselemente üblicherweise beispielsweise eine metallische Beschichtung oder eine auf einer Kunststoffplatte angeordnete dünne Aluminiumplatte auf, um die über die darauf eingebetteten Heizungsrohre abgegebene Wärme großflächig zu verteilen und möglichst effizient in Richtung des Oberflächenbelags zu leiten. Die Bodenbelagsträgerelemente sollen mit Hilfe der Haftmittelbeschichtung möglichst einfach, rasch und zuverlässig auf den Belagselementen mit der Fußbodenheizung angeordnet und zumindest für die Dauer der Montage der Bodenbelagsanordnung festgelegt werden können.

Die profilierte Kunststoffbahn weist eine dreidimensional strukturierte Oberseite auf, die einem darauf verteilten Fliesenkleber oder Klebemörtel ausreichend Halt bietet. Durch die Verfüllung von Vertiefungen in der Oberseite der profilierten Kunststoffbahn wird eine innige und formschlüssige Verbindung zwischen der profilierten Kunststoffbahn und dem darauf verteilten Klebemörtel ermöglicht. Der Fliesenkleber oder Klebemörtel durchdringt und umgibt dabei das auf der profilierten Kunststoffbahn angeordnete Gittergewebe. Die dadurch erzeugte Verbundwirkung führt dazu, dass auch eine räumlich sehr begrenzt auf den Oberflächenbelag einwirkende Druckbelastung großflächig verteilt und auf einen wesentlich größeren Flächenbereich der darunter angeordneten plattenförmigen Belagselemente abgetragen wird. Bei den üblicherweise auftretenden mechanischen Belastungen kann dadurch eine Beschädigung der zweckmäßigerweise aus einem Schaumkunststoffmaterial bestehenden plattenförmigen Belagselemente vermieden werden.

Gemäß einer Ausgestaltung des Erfindungsgedankens ist vorgesehen, dass die profilierte Kunststoffbahn streifenförmige und parallel ausgerichtete Erhebungen und Vertiefungen aufweist. Die streifenförmigen Erhebungen und Vertiefungen bilden kanalartige Strukturen. Auf der Oberseite der profilierten Kunststoffbahn kann die jeweils verwendete Füllmasse, beispielsweise ein Fliesenkleber oder ein Klebemörtel, in die streifenförmigen Vertiefungen eindringen und einen formschlüssigen Eingriff mit der profilierten Kunststoffbahn bilden. Von einer Unterseite aus bilden die streifenförmigen Erhebungen Lüftungskanäle, in die die auf der Oberseite der profilierten Kunststoffbahn aufgetragene Füllmasse nicht eindringt und in denen erwärmte Luft zirkulieren kann. Auf diese Weise kann die aus den Rohrleitungen austretende Wärme über die Lüftungskanäle großflächig verteilt und gleichmäßig auf den darüber angeordneten Oberflächenbelag übertragen werden.

Vorzugsweise ist vorgesehen, dass die profilierte Kunststoffbahn wechselseitig ausgerichtete nutenförmige Kanäle aufweist. Die beispielsweise streifenförmig oder mäanderförmig ausgebildeten, abwechselnd auf der Oberseite oder der Unterseite angeordneten nutenförmigen Kanäle bilden entweder von oben betrachtet Ausnehmungen, die eine innige und formschlüssige Verbindung mit dem darauf angeordneten Füllmaterial auf der Oberseite der profilierten Kunststoffbahn ermöglichen, oder auf der Unterseite angeordnete Lüftungskanäle, die eine gleichmäßige Verteilung der durch die Rohrleitungen übertragenen Wärme begünstigen.

Im Hinblick auf eine möglichst einfache und kostengünstige Herstellung des Bodenbelagsträgerelements ist vorgesehen, dass eine Auflagefläche der Unterseite der profilierten Kunststoffbahn im Wesentlichen vollständig mit einer Haftmittelbeschichtung bedeckt ist. Die streifenförmigen oder kanalförmigen Erhebungen und Vertiefungen der profilierten Kunststoffbahn bilden mit den sich längs der Unterseite erstreckenden Abschnitten jeweils Bereiche, in denen die profilierte Kunststoffbahn auf einem Untergrund flächenbündig aufliegt. Die sich längs der Unterseite erstreckenden Abschnitte bilden eine Auflagefläche der Unterseite, die auf dem Untergrund oder auf plattenförmigen Belagselementen flächig aufliegt. Auf diese Auflagefläche kann beispielsweise mittels geeigneter Transferwalzen die Haftmittelbeschichtung aufgetragen werden.

Gemäß einer vorteilhaften Ausgestaltung des Erfindungsgedankens ist vorgesehen, dass die profilierte Kunststoffbahn flüssigkeitsdurchlässige Aussparungen aufweist. Die flüssigkeitsdurchlässigen Aussparungen begünstigen eine rasche Erwärmung und Austrocknung der von oben auf die profilierte Kunststoffbahn aufgetragenen Füllmassewerden, so dass eine kurze Trocknungszeit und ein rasches Aushärten und anschließendes Benutzen der Füllmasse, bzw. des darin eingebetteten Oberflächenbelags ermöglicht wird. Die aus dem Stand der Technik bekannten Nachteile einer flüssigkeitsundurchlässigen Feuchtigkeitssperre die unmittelbar unterhalb des Oberflächenbelags angeordnet ist, können auf diese Weise vermieden werden.

Um die Herstellung einer profilierten Kunststoffbahn mit flüssigkeitsdurchlässigen Aussparungen zu erleichtern ist vorgesehen, dass die Aussparungen im Bereich von Vertiefungen und mindestens abschnittsweise flächenbündig mit einer Unterseite der profilierten Kunststoffbahn angeordnet sind. Die Aussparungen können im Anschluss an einen Tiefziehvorgang oder an ein Extrudieren der profilierten Kunststoffbahn durch Stanzen, Schneiden oder einseitiges Anfräsen kostengünstig und ohne größeren Zeitaufwand erzeugt werden. Die Beschichtung mit einer Haftmittelschicht wird zweckmäßigerweise erst im Anschluss an die Ausbildung der Aussparungen vorgenommen.

Durch die Anordnung der Aussparungen in einem unteren Bereich bzw. an der Unterseite der profilierten Kunststoffbahn wird eine wirkungsvolle Belüftung der profilierten Kunststoffbahn und der darauf angeordneten Bodenbelagsschichten gewährleistet, so dass ein rascher Wärmeaustausch und das Vermeiden von Staunässe begünstigt werden.

Durch die dreidimensional strukturierte Oberfläche der profilierten Kunststoffbahn wird in vielen Fällen bereits eine ausreichend formstabile und mechanisch belastbare Verbindung zwischen der profilierten Kunststoffbahn und einer darauf verteilten dünnen Schicht eines Fliesenklebers oder eines Klebemörtels gewährleistet. Die Dicke der aus dem Fliesenkleber oder dem Klebemörtel gebildeten Schicht muss lediglich ausreichend groß sein, um die dreidimensional strukturierte Oberfläche der profilierten Kunststoffbahn zu bedecken und zudem eine Einbettung des Oberflächenbelags zu ermöglichen.

Zusätzlich kann vorgesehen sein, dass das Gittergewebe bereichsweise auf der profilierten kunststoffbahn festgelegt ist. Das Füllmaterial durchdringt und umgibt das Gittergewebe und bildet dadurch einen formstabilen Verbund mit dem Gittergewebe, der auch bei thermischer Belastung und einer dadurch bedingten Ausdehnung oder Zusammenziehung eine zuverlässige Verbundwirkung zwischen dem Gittergewebe und dem Füllmaterial gewährleistet.

Gemäß einer vorteilhaften Ausgestaltung des Erfindungsgedankens ist vorgesehen, dass das Gittergewebe mit einem dauerelastischen oder dauerplastischen Klebemittel mit der profilierten Kunststoffbahn verklebt ist. Zusätzlich oder stattdessen kann vorgesehen sein, dass die profilierte Kunststoffbahn mit einem dauerelastischen oder dauerplastischen Klebemittel mit den darunter angeordneten plattenförmigen Belagselementen verklebt ist. Durch die Verwendung eines dauerelastischen oder dauerplastischen Klebemittels kann gewährleistet werden, dass die durch thermische Beanspruch bedingten Dehnungen und Spannungen der plattenförmigen Belagselemente mit den darin angeordneten Rohrleitungen einerseits und des Oberflächenbelags andererseits voneinander entkoppelt werden. Gleichzeitig werden mit dem dauerelastischen oder dem dauerplastischen Klebemittel eine zuverlässige Haftwirkung und eine dadurch begünstigte Verbundwirkung zwischen den einzelnen Schichten der Bodenbelagsanordnung herbeigeführt.

Die Erfindung betrifft auch eine Bodenbelagsanordnung mit einem Bodenbelagsträgerelement, auf dem ein begehbarer Oberflächenbelag verlegbar ist, wobei das Bodenbelagsträgerelement eine profilierte Kunststoffbahn mit einem auf einer Oberseite der profilierten Kunststoffbahn angeordneten Gittergewebe und mit einer an einer Unterseite der profilierten Kunststoffbahn mindestens bereichsweise angeordneten Haftmittelbeschichtung aufweist. Erfindungsgemäß ist vorgesehen, dass die Bodenbelagsanordnung auf einem Untergrund verlegbare plattenförmige Belagselemente mit nutenförmigen Aufnahmekanälen für Rohrleitungen aufweist, die von einem Wärmemedium durchströmbar sind. Die erfindungsgemäße Kombination der Bodenbelagsträgerelemente mit plattenförmigen Belagselementen, in denen eine Fußbodenheizung eingebettet ist, ermöglicht eine einfach und in einem Arbeitsgang verlegbare Bodenbelagsanordnung, die gleichzeitig eine sehr geringe Aufbauhöhe aufweist.

Die Belagselemente weisen nutenförmige Aufnahmekanäle auf, in welche die Rohrleitungen eingebracht und bündig mit einer Oberfläche der Belagselemente abschließend eingebettet werden können.

Vorzugsweise ist vorgesehen, dass die plattenförmigen Belagselemente auf einer der profilierten Kunststoffbahn zugewandten Oberseite eine Deckschicht aus einem gut wärmeleitenden Material aufweisen. Geeignete wärmeleitende Materialien sind beispielsweise Metall und im Hinblick auf Material- und Herstellungskosten insbesondere Aluminium.

Damit die mit der Fußbodenheizung in die

Bodenbelagsanordnung eingebrachte Wärme möglichst zur Oberseite gerichtet abgegeben wird ist vorgesehen, dass plattenförmige Belagselement aus einem Leichtbaustoff mit thermisch isolierender Wirkung besteht. Geeignete Materialien sind beispielsweise Schaumkunststoffe, die ein geringes Gewicht, eine hinlängliche mechanische Belastbarkeit und eine thermisch isolierende Wirkung aufweisen.

Nachfolgend wird ein Ausführungsbeispiel des Erfindungsgedankens näher erläutert, das in der Zeichnung dargestellt ist. Es zeigt:
Fig. 1 eine perspektivische Ansicht einer Bodenbelagsanordnung mit einem Bodenbelagsträgerelement, wobei die einzelnen Schichten der Bodenbelagsanordnung zur Veranschaulichung seitlich versetzt dargestellt sind,
Fig. 2 eine Schnittansicht der in Fig. 1 gezeigten Bodenbelagsanordnung längs der Linie II-II in Fig. 1 und
Fig. 3 eine vergrößerte Schnittansicht eines Bodenbelagsträgerelements mit einer während des Transports und der Lagerung auf einer Haftmittelbeschichtung angeordneten Schutzschicht.

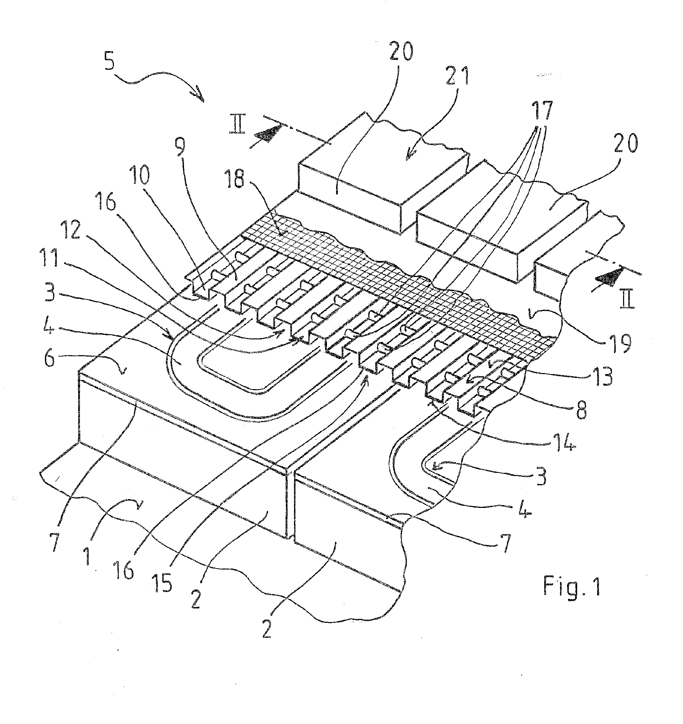

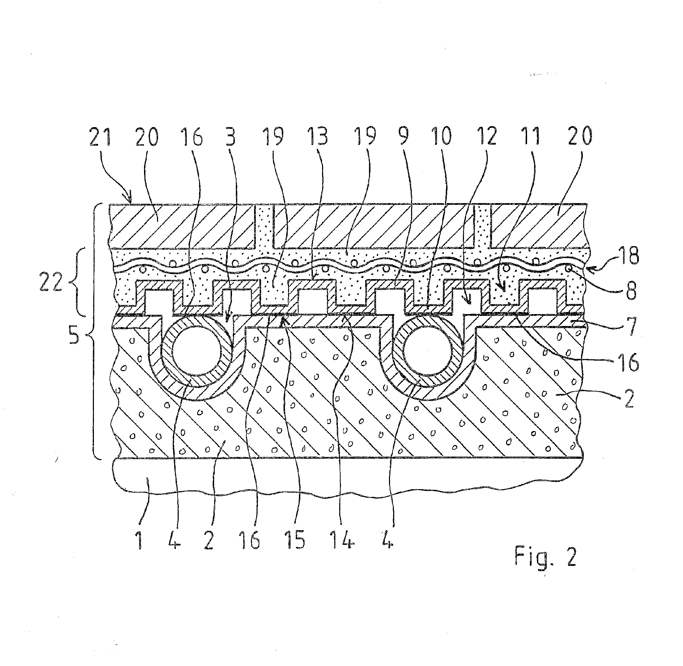

Bei dem in den Figuren 1 und 2 dargestellten Ausführungsbeispiel sind auf einem Untergrund 1 unmittelbar aneinanderstoßend mehrere plattenförmige Belagselemente 2 verlegt. In den plattenförmigen Belagselementen 2, die aus einem Schaumkunststoffmaterial bestehen und eine isolierende Wirkung zum Untergrund 1 hin aufweisen, sind mäanderförmig angeordnet nutenförmige Aufnahmekanäle 3 ausgebildet. In den nutenförmigen Aufnahmekanälen 3 sind Rohrleitungen 4 verlegt, die von einem Wärmemedium durchströmt werden und dabei Wärme an angrenzende Schichten einer Bodenbelagsanordnung 5 abgeben können. Die plattenförmigen Belagselemente 2 weisen auf ihrer Oberseite 6 eine metallische Beschichtung bzw. ein dünnes Aluminiumblech 7 auf, das die aus den Rohrleitungen 4 übertragene Wärme großflächig verteilt.

Auf den plattenförmigen Belagselementen 2 ist eine profilierte Kunststoffbahn 8 angeordnet. Die profilierte Kunststoffbahn 8 ist aus einem formstabilen Kunststoffmaterial beispielsweise durch Tiefziehen oder durch einen Extrusionsvorgang hergestellt. Die profilierte Kunststoffbahn 8 kann eine ausreichend dicke Querschnittsfläche aufweisen, so dass die profilierte Kunststoffbahn 8 formstabil ist und in Form von ebenen Tafeln oder Platten gelagert und auf den plattenförmigen Belagselementen 2 verteilt werden kann. Es ist ebenfalls denkbar, dass die profilierte Kunststoffbahn 8 aus einem hinreichend dünnen Kunststoffmaterial hergestellt ist, so dass die profilierte Kunststoffbahn 8 quasi endlos hergestellt, aufgerollt gelagert und bahnenförmig auf den plattenförmigen Belagselementen 2 ausgelegt werden kann.

Die profilierte Kunststoffbahn 8 weist streifenförmige und parallel verlaufende Erhebungen 9 und Vertiefungen 10 auf. Die Erhebungen 9 und die Vertiefungen 10 bilden jeweils nutenförmige Kanäle 11, 12, die von einer Oberseite 13 ausgehend oder von einer Unterseite 14 der profilierten Kunststoffbahn 8 ausgehend in der profilierten Kunststoffbahn 8 ausgebildet sind.

Alle Vertiefungen 10 bilden mit ihren flächenbündig zu der Unterseite 14 angeordneten Bereichen eine den plattenförmigen Belagselementen 2 zugewandte Auflagefläche 15. Die Auflagefläche 15 ist vollständig mit einer Haftmittelbeschichtung 16 bedeckt. Das flächig aufgetragene Haftmittel 16 ist ein geeignetes dauerplastisches Klebemittel. Durch das Haftmittel 16 wird die profilierte Kunststoffbahn 8 während des Verlegevorgangs auf den plattenförmigen Belagselementen 2 fixiert. Eine stoßfreie oder überlappende Anordnung und Ausrichtung benachbarter profilierter Kunststoffbahnen 8, die eine vorgegebene Bodenfläche im Wesentlichen vollständig bedecken und eine Tragschicht für einen darauf angeordneten Oberflächenbelag bilden, wird dadurch erleichtert. Da keine Einbettung in Klebemörtel oder dergleichen erforderlich wird, können die profilierten Kunststoffbahnen 8 von einem Installateur oder von einer handwerklich begabten Person auf den plattenförmigen Belagselementen 2 verlegt werden. Eine Verlegung durch einen Fliesenleger ist nicht erforderlich.

In der profilierten Kunststoffbahn 8 sind senkrecht zu einer Ausrichtung der nutenförmigen Kanäle 11, 12 ebenfalls streifenförmige Aussparungen 17 an der Unterseite 14 der profilierten Kunststoffbahn 8 ausgebildet. Die streifenförmigen Aussparungen 17 bilden Belüftungsöffnungen, so dass erwärmte Luft von der Unterseite 14 der profilierten Kunststoffbahn 8 einen unmittelbaren Kontakt mit den darüber befindlichen Schichten der Bodenbelagsanordnung 5 haben kann.

Auf der Oberseite 13 der profilierten Kunststoffbahn 8 ist ein gitterförmiges Gewebe 18 aus einem glasfaserverstärkten Kunststoffmaterial angeordnet. Das gitterförmige Gewebe 18 ist zumindest bereichsweise mittels eines geeigneten Klebemittels auf der profilierten Kunststoffbahn 8 fixiert.

Auf die profilierte Kunststoffbahn 8 ist eine dünne Schicht aus einem Klebemörtel 19 aufgebracht. Der Klebemörtel 19 durchdringt und umgibt das gitterartige Gewebe 18 und dringt von oben in die Vertiefungen 10 der profilierten Kunststoffbahn 8 ein. Der Klebemörtel 19 bildet mit dem gitterartigen Gewebe 18 einen mechanisch äußerst stabilen und belastbaren Verbund, der formschlüssig mit der profilierten Kunststoffbahn 8 in Eingriff steht und verbunden ist. Die auf der Unterseite 14 der profilierten Kunststoffbahn 8 ausgebildeten nutenförmigen Kanäle 12 werden nicht von dem Klebemörtel 19 ausgefüllt und begünstigen eine Verteilung von erwärmter Luft über die mit der profilierten Kunststoffbahn 8 bedeckten Oberfläche 6 der plattenförmigen Belagselemente 2.

In den Fugenmörtel 19 sind Fliesen 20 eingebettet, die einen begehbaren Oberflächenbelag 21 bilden.

Die profilierte Kunststoffbahn 8 bildet zusammen mit der an der Unterseite 14 angebrachten Haftmittelbeschichtung 16 und dem auf der Oberseite 13 fixierten Gittergewebe 18 ein einfach zu verlegendes Bodenbelagsträgerelement 22, das vorgefertigt in den Handel gebracht und in kürzester Zeit unmittelbar nach dem Verlegen der plattenförmigen Belagselemente 2 darauf angeordnet und fixiert werden kann.

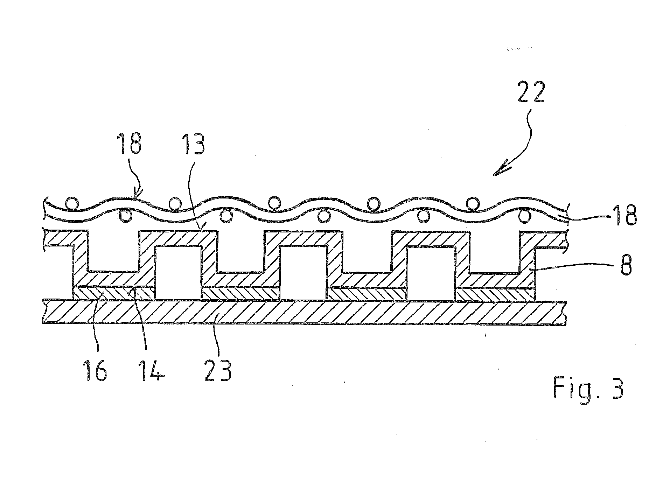

In Fig. 3 ist das in den Fig. 1 und 2 als Bestandteil einer Bodenbelagsanordnung 5 dargestellte Bodenbelagsträgerelement 22 vergrößert in einer Schnittansicht abgebildet. Um das Bodenbelagsträgerelement 22 nach dessen Herstellung lagern und bis zum Verlegeort transportieren zu können ist die Haftmittelbeschichtung 16 an der Unterseite 14 der profilierten Kunststoffbahn 8 mit einer Schutzfolie 23 aus einem geeigneten Silikonmaterial bedeckt. Die Schutzfolie 23 verhindert eine haftende Verbindung der mit dem Haftmittel 16 beschichteten Unterseite 14 mit einer benachbarten Oberfläche. Um das Bodenbelagsträgerelement 22 auf einem Untergrund 1 oder auf den plattenförmigen Belagselementen 2 fixieren zu können muss lediglich die Schutzfolie 23 entfernt und das Bodenbelagsträgerelement in der gewünschten Position angeordnet und durch einen ausreichenden Anpressdruck fixiert werden.

## Patentansprüche

1. Bodenbelagsträgerelement (22), auf dem ein begehbarer Oberflächenbelag verlegbar ist, mit einer profilierten Kunststoffbahn (8) und mit einem auf einer Oberseite (13) der profilierten Kunststoffbahn (8) angeordneten Gittergewebe (16), **dadurch gekennzeichnet, dass** eine Unterseite (14) der profilierten Kunststoffbahn (8) mindestens bereichsweise eine Haftmittelbeschichtung (16) aufweist.

2. Bodenbelagsträgerelement (22) nach Anspruch 1, **dadurch gekennzeichnet, dass** die Haftmittelbeschichtung (16) aus einem dauerelastischen oder dauerplastischen Klebemittel besteht.

3. Bodenbelagsträgerelement (22) nach Anspruch 1 oder 2, **dadurch gekennzeichnet, dass** die Haftmittelbeschichtung (16) aus einem Klebemittel mit guten Hafteigenschaften auf einer Oberfläche aus Metall, aus Kunststoff oder aus einer metallischen Beschichtung besteht.

4. Bodenbelagsträgerelement (22) nach einem der vorangehenden Ansprüche, **dadurch gekennzeichnet, dass** die profilierte Kunststoffbahn (8) streifenförmige und parallel ausgerichtete Erhebungen (9) und Vertiefungen (10) aufweist.

5. Bodenbelagsträgerelement (22) nach einem der vorangehenden Ansprüche, **dadurch gekennzeichnet, dass** die profilierte Kunststoffbahn (8) wechselseitig ausgerichtete nutenförmige Kanäle (11, 12) aufweist.

6. Bodenbelagsträgerelement (22) nach einem der vorangehenden Ansprüche, **dadurch gekennzeichnet, dass** eine Auflagefläche (15) der Unterseite (14) der profilierten Kunststoffbahn (8) im Wesentlichen vollständig mit einer Haftmittelbeschichtung (16) bedeckt ist.

7. Bodenbelagsträgerelement (22) nach einem der vorangehenden Ansprüche, **dadurch gekennzeichnet, dass** die Haftmittelbeschichtung (16) mit einer abziehbaren Schutzfolie (23) bedeckt ist.

8. Bodenbelagsträgerelement (22) nach einem der vorangehenden Ansprüche, **dadurch gekennzeichnete, dass** die profilierte Kunststoffbahn (8) flüssigkeits- und luftdurchlässige Aussparungen (17) aufweist.

9. Bodenbelagsträgerelement (22) nach Anspruch 8, **dadurch gekennzeichnet, dass** die Aussparungen (17) im Bereich von Vertiefungen (10) und mindestens abstandsweise flächenbündig mit einer Unterseite (14) der profilierten Kunststoffbahn (8) angeordnet sind.

10. Bodenbelagsträgerelement (22) nach einem der vorangehenden Ansprüche, **dadurch gekennzeichnet, dass** das Gittergewebe (18) bereichsweise auf der profilierten Kunststoffbahn (8) festgelegt ist.

11. Bodenbelagsträgerelement (22) nach einem der vorangehenden Ansprüche, **dadurch gekennzeichnet, dass** das Gittergewebe (18) mit einem dauerelastischen oder dauerplastischen Klebemittel mit der profilierten Kunststoffbahn (8) verklebt ist.

12. Bodenbelagsanordnung (5) mit einem Bodenbelagsträgerelement (22), auf dem ein begehbarer Oberflächenbelag verlegbar ist, wobei das Bodenbelagsträgerelement (22) eine profilierte Kunststoffbahn (8) mit einem auf einer Oberseite der profilierten Kunststoffbahn (8) angeordneten Gittergewebe (18) und mit einer an einer Unterseite (14) der profilierten Kunststoffbahn (8) mindestens bereichsweise angeordneten Haftmittelbeschichtung (16) aufweist, **dadurch gekennzeichnet, dass** die Bodenbelagsanordnung (5) auf einem Untergrund (1) verlegbare plattenförmige Belagselemente (2) mit nutenförmigen Aufnahmekanälen (3) für Rohrleitungen (4) aufweist, die von einem Wärmemedium durchströmbar sind.

13. Bodenbelagsanordnung (5) nach Anspruch 12, **dadurch gekennzeichnet, dass** die plattenförmigen Belagselemente (2) auf einer der profilierten Kunststoffbahn (8) zugewandten Oberseite (6) eine Deckschicht (7) aus einem gut wärmeleitenden Material aufweisen.

14. Bodenbelagsanordnung (5) nach Anspruch 13, **dadurch gekennzeichnet, dass** die Deckschicht (7) aus Aluminium oder aus einem Metall besteht.

15. Bodenbelagsanordnung (5) nach einem der Ansprüche 12 bis 14, **dadurch gekennzeichnet, dass** das plattenförmige Belagselement (2) aus einem Leichtbaustoff mit thermisch isolierender Wirkung besteht.
